# EUROPEAN PATENT APPLICATION

(11) **EP 4 581 991 A1**
(43) Date of publication of application: **09.07.2025**
(21) Application number: 24150224.4
(22) Date of filing: 03.01.2024
(51) Int. Cl.: A47J 37/06

(54) **AIR GUIDE MEMBER FOR A DOMESTIC COOKING APPLIANCE**

(71) Applicant: Versuni Holding B.V., 5656 AE Eindhoven (NL)
(72) Inventor: HIETBRINK, Ingrid, 5656 AE Eindhoven (NL)
(74) Representative: Vollering, Stefanus Franciscus Maria

(57) **Abstract**

Provided is an air guide member (120) for arranging around a domestic cooking appliance's fan (106). The air guide member has an interior surface (122) for extending around the fan. The interior surface is shaped to redirect airflow from the fan back towards the fan's axis of rotation (109) and away from fan.

## Description

### FIELD OF THE INVENTION

The invention relates to a domestic cooking appliance, such as a table-top cooking appliance, comprising a food-receiving space, a heating element assembly, and a fan rotatable to circulate air heated by the heating element assembly in the food-receiving space.

The invention also relates to an air guide member for arranging around a domestic cooking appliance's fan.

### BACKGROUND OF THE INVENTION

Various different types of domestic cooking appliances are known, such as table-top cooking appliances that are positionable by the consumer on a table-top or kitchen countertop.

One such type of table-top cooking appliance is the air fryer. Air fryers are already common domestic cooking appliances but their popularity continues to grow. This may be at least partly due to air fryers tending to consume less energy relative to built-in cooking appliances.

The most common air fryer architecture involves a radial fan and a heating element being arranged above a food container or basket in which food ingredients are receivable. The airflow goes through the food container from bottom to top when the air fryer is orientated for use. The radiation from the heating element reaches the food from above. This configuration is proven to provide favorable frying results.

However, arranging components, such as the radial fan and/or the heating element, above the food container can have certain disadvantages. For example, such components may make it more difficult to monitor, e.g. visually monitor and/or monitor via a camera, cooking of the food ingredients from above the food container. This is simply because of the components obscuring view of the food ingredients.

Moving the radial fan beneath the food container can also present technical challenges, particularly in terms of the direction of airflow through the food container. The radial fan forces air outwardly away from the fan's axis of rotation, which can risk heated air being forced primarily towards the periphery of the food container. This can lead to food located towards the periphery being overcooked or even burned, and food disposed more centrally in the food container being undercooked.

More generally, it would be desirable to provide more flexibility in terms of positioning of the fan of a domestic cooking appliance, e.g. air fryer, relative to its food-receiving space, whilst also minimizing the risk of cooking performance being compromised.

### SUMMARY OF THE INVENTION

The invention is defined by the claims.

According to examples in accordance with an aspect of the invention, there is provided a domestic cooking appliance for air frying food ingredients, the domestic cooking appliance comprising: a cooking chamber comprising a food-receiving space for receiving the food ingredients; a heating element assembly; a circulation system for circulating air heated by the heating element assembly in the cooking chamber, wherein the circulation system comprises a radial fan rotatable to circulate air heated by the heating element assembly, a closed or closeable front side of the fan facing the food-receiving space, and an open or openable back side of the fan facing away from the food-receiving space, the fan being rotatable about an axis of rotation to generate an airflow from air received via the open back side of the fan while the front side is closed, the airflow being directed by the fan outwardly away from the axis of rotation; and an air guide member having an interior surface for extending around at least part of the fan, wherein the interior surface is shaped to redirect the airflow back towards the axis of rotation and away from the front side of the fan into the food-receiving space.

The air guide member can provide flexibility in terms of where the fan of the circulation system can be arranged in the domestic cooking appliance. In some embodiments, the fan is arranged beneath the food-receiving space.

Arranging the fan beneath the food-receiving space can assist visibility of the food ingredients, since the food ingredients may be viewable from above the food-receiving space without the fan and, for example, other components, such as a motor for driving rotation of the fan, obscuring view of the food ingredients.

It may be desirable to provide an airflow that traverses a center of the food-receiving space from a bottom of the food-receiving space to a top of the food-receiving space, when the domestic cooking appliance is orientated for use.

This bottom-to-top airflow through the center of the food-receiving space may be challenging to implement when the radial fan is arranged beneath the food-receiving space.

However, by the air guide member redirecting airflow from the fan back towards the fan's rotation axis and away from the fan's front side into the food-receiving space, the air guide member can assist to provide an airflow that traverses the center of the food-receiving space from the bottom of the food-receiving space to the top of the food-receiving space in spite of the fan's positioning beneath the food-receiving space.

In other words, to avoid a high-pressure airflow being directed to food mainly at the sides of the food-receiving space, the air guide member is arranged to redirect the airflow from the fan. The airflow generated by the fan is directed outwardly/radially, away from the fan's axis of rotation. However, the interior surface of the air guide member redirects the airflow back towards the axis of rotation and into the food-receiving space.

It is also generally noted that food ingredients received in the food-receiving space can be unevenly distributed. In particular, the food ingredients may be predominantly distributed in a center of the food-receiving space and more sparsely distributed at or towards a periphery of the food-receiving space. This can lead to overcooking or burning of the food ingredients where they are more sparsely distributed, and undercooking of the food ingredients where they are more plentifully distributed.

It may therefore be desirable to control a direction of heated air towards the food-receiving space to assist the user to compensate for uneven food distribution in the food-receiving space.

The airflow redirected by the air guide member can assist to minimize the risk of undercooking of food ingredients arranged in the food-receiving space, e.g. in the center of the food-receiving space, along or proximal to the axis of rotation, whilst also lessening the risk of overcooking or burning of food ingredients in the food-receiving space, e.g. at or towards a periphery of the food-receiving space, that are more spaced apart from the axis of rotation.

By the radial fan forcing air outwardly/radially, away from the fan's rotation axis, a sufficient pressure can be created for a favorable cooking result. Less pressure may be generated in the case of, for example, an axial fan arranged to blow air along the axial fan's rotation axis. The radial fan may generate sufficient volume and velocity, particularly in comparison to an axial fan.

In some embodiments, the air guide member comprises an exterior surface for facing away from the fan, with the exterior surface being arranged and shaped to guide air around the fan to enable the guided air to enter the fan via the back side. Thus, the air guide member can also assist to guide air back to the back side of the fan. The air guided to the back side of the fan can (re-)enter the fan and be directed by the fan outwardly away from the fan's axis of rotation towards the air guide member's interior surface.

In some embodiments, the domestic cooking appliance comprises a fluid permeable food support for supporting the food ingredients at least when the food ingredients are received in the food-receiving space.

In such embodiments, an air circulation zone may be defined in the cooking chamber beneath the fluid permeable food support. The fluid permeable food support may allow the airflow re-directed by the air guide member to pass through the fluid permeable food support to reach the food ingredients supported thereon.

Each of the fan and the air guide member may be arranged beneath the fluid permeable food support.

In some embodiments, the interior surface comprises a surface portion shaped to extend towards the axis of rotation and away from the front side towards the food-receiving space. The surface portion may, for example, curve towards the axis of rotation, but with the curve's curvature and the surface portion's extension being selected to enable the surface portion to direct the airflow to the food-receiving space, as well as towards the fan's axis of rotation.

In some embodiments, an inner chamber wall that at least partly delimits the food-receiving space is arranged inside a chamber wall that at least partly delimits the cooking chamber. In such embodiments, a duct may be defined between the inner chamber wall and the chamber wall.

The duct may deliver air back towards the fan, e.g. back towards the back side of the fan.

In some embodiments, the exterior surface of the air guide member is arranged to guide air in the duct around the fan to enable the guided air to enter the fan via the back side. Thus, the exterior surface of the air guide member may work together with the duct to deliver air back towards the back side of the fan, where the air can (re-)enter the fan and be directed by the fan outwardly away from the fan's axis of rotation towards the air guide member's interior surface.

Alternatively or additionally, the inner chamber wall may be included in a food basket received or receivable in the cooking chamber. In such embodiments, the fluid permeable food support may, for instance, also be included in the food basket.

In some embodiments, channels for guiding air are defined on and/or in the interior surface of the air guide member, with the channels being orientated so that the airflow received in the channels is guided around at least part of the interior surface's circumference, as well as being redirected towards the axis of rotation and away from the front side into the food-receiving space.

The channels may promote rotation of the airflow in the food-receiving space. This rotating, in other words twisting, airflow can come into contact with various different regions of the food ingredients, and can therefore assist to provide even cooking of the food ingredients received in the food-receiving space.

In some embodiments, the domestic cooking appliance is configurable to switch between a first configuration and a second configuration. In the first configuration, the interior surface of the air guide member is arranged to redirect the airflow towards the axis of rotation and away from the front side into the food-receiving space, with the front side of the fan being closed. In the second configuration, the interior surface is bypassed by the airflow, with the front side of the fan being open.

By configuring the domestic cooking appliance, e.g. configuring at least the fan and the air guide member, to switch between the first configuration and the second configuration, different cooking conditions in the food-receiving space can be selected.

The domestic cooking appliance can be designed to be configurable in this way in any suitable manner. In some embodiments, the air guide member comprises a plurality of moveable members, e.g. a plurality of moveable metal sheet members, that are moveable relative to each other to enable the airflow to bypass the interior surface in the second configuration.

Moreover, the front side can be opened and closed in any suitable manner. In some embodiments, the domestic cooking appliance comprises a cover assembly moveable to enable closing of the front side when the first configuration is adopted and opening of the front side when the second configuration is adopted.

In embodiments in which the back side of the fan is openable, a (further) cover assembly may be moveable to enable opening and closing of the back side.

Alternatively, the back side may be permanently open.

In some embodiments, the duct is arranged so that, in the second configuration, the airflow bypassing the interior surface is initially directed into the duct, and is subsequently passed from the duct into the food-receiving space. The airflow direction through the duct and the food-receiving space may thus be reversed in the second configuration compared to in the first configuration.

A motor may drive rotation of the fan, which motor can, for instance, be included in a separate cooking device, e.g. base station. The fan may thus be rotatable when the fan is coupled to the motor included in the separated cooking device, e.g. base station.

In some embodiments, the domestic cooking appliance comprises a magnetic coupling for transferring drive from the motor to rotate the fan.

In such embodiments, the motor can, for instance, be included in the separate cooking device, e.g. base station, that also includes a driving coupling part of the magnetic coupling. The fan may accordingly be driven via a driven coupling part that magnetically couples to the driving coupling part.

In other embodiments, the motor is permanently coupled to the fan.

More generally, the air guide member can facilitate implementation of various arrangements of the fan and the heating element assembly. Thus, the fan can be arranged at any suitable location in the domestic cooking appliance. The fan may be arranged beneath the food-receiving space or above the food-receiving space when the domestic cooking appliance is orientated for use.

Arranging the fan beneath the food-receiving space may be particularly appropriate for embodiments in which the motor for driving the fan is beneath the fan when the cooking appliance is orientated for use. The motor may, for instance, be included in a separate cooking device, e.g. base station, on which the fan and the cooking chamber are mountable.

Arranging the fan above the food-receiving space can lessen the risk of contamination of the fan by, for example, oil and grease dripping down onto the fan from the food ingredients received in the food-receiving space.

The heating element assembly may, for example, comprise a fan-surrounding heating element that extends at least partly around the fan. The fan-surrounding heating element may, for example, annularly extend around the fan. Alternatively, the fan-surrounding heating element may be U-shaped, and thus extend around three sides of the fan.

Alternatively or additionally, the fan and at least part of the heating element assembly may be separated from each other across the food-receiving space.

Alternatively or additionally, the heating element assembly may include an upper heating element arranged above the food-receiving space; and/or a lower heating element arranged beneath the food-receiving space.

In some embodiments, the duct comprises an upright portion for carrying air in the duct between a top of the food-receiving space and a bottom of the cooking chamber when the domestic cooking appliance is orientated for use. In such embodiments, the heating element assembly may comprise at least one duct heating element arranged in the upright portion of the duct, e.g. as an alternative or in addition to one or more of the fan-surrounding heating element, the upper heating element and the lower heating element.

By arranging the duct heating element(s) in the upright portion of the duct, the inner chamber wall can shield the food ingredients in the food-receiving space from being directly irradiated by the duct heating element(s). This can assist to lessen the risk of burning of the food ingredients.

In some embodiments, the domestic cooking appliance comprises a debris collection member for arranging beneath the food-receiving space to collect oil and/or food debris. In such embodiments, the debris collection member being arranged behind the back side of the fan.

A shielding portion may, for example, be arranged between at least part of the heating element assembly, e.g. the lower and/or fan-surrounding heating element, and the debris collection member. In such embodiments, the shielding portion may, for example, be included in, or extend from, the air guide member.

The shielding portion may assist to minimize smoking caused by the oil and/or food debris collected by the debris collection member being directly irradiated by the heating element assembly, e.g. the lower and/or fan-surrounding heating element.

It is noted more generally that the domestic cooking appliance may be configured so that the airflow traverses a height of the food-receiving space when the domestic cooking appliance is orientated for use.

In this manner, the airflow passes through, rather than merely across, the food ingredients received in the food-receiving space. Thus, an air frying-type cooking effect can be promoted by the domestic cooking appliance.

In at least some embodiments, the domestic cooking appliance comprises, e.g. is in the form of, an air fryer.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
FIG. 1 schematically depicts a domestic cooking appliance according to a first example;
FIGs. 2A and 2B schematically depict a domestic cooking appliance according to a second example;
FIG. 3 schematically depicts a domestic cooking appliance according to a third example;
FIG. 4 provides a cutaway view of part of a domestic cooking appliance according to a fourth example;
FIG. 5 provides a cutaway view of an air guide member according to an example;
FIG. 6 provides a cutaway view of part of a domestic cooking appliance according to a fifth example;
FIG. 7 provides a cutaway view of an air guide member according to another example;
FIGs. 8A and 8B provide views of a domestic cooking appliance according to a sixth example, with the domestic cooking appliance adopting a first configuration;
FIGs. 8C and 8D provide views of the domestic cooking appliance shown in FIGs. 8A and 8B, but with the domestic cooking appliance adopting a second configuration;
FIGs. 9A and 9B schematically illustrate a first example of airflow adjustment enabled by the domestic cooking appliance's air guide member;
FIGs. 10A and 10B schematically illustrate a second example of airflow adjustment enabled by the domestic cooking appliance's air guide member;
FIGs. 11A and 11B schematically illustrate a third example of airflow adjustment enabled by the domestic cooking appliance's air guide member; and
FIGs. 12A and 12B schematically illustrate a fourth example of airflow adjustment enabled by the domestic cooking appliance's air guide member.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Provided is an air guide member for arranging around a domestic cooking appliance's fan. The air guide member has an interior surface for extending around the fan. The interior surface is shaped to redirect airflow from the fan back towards the fan's axis of rotation and away from fan.

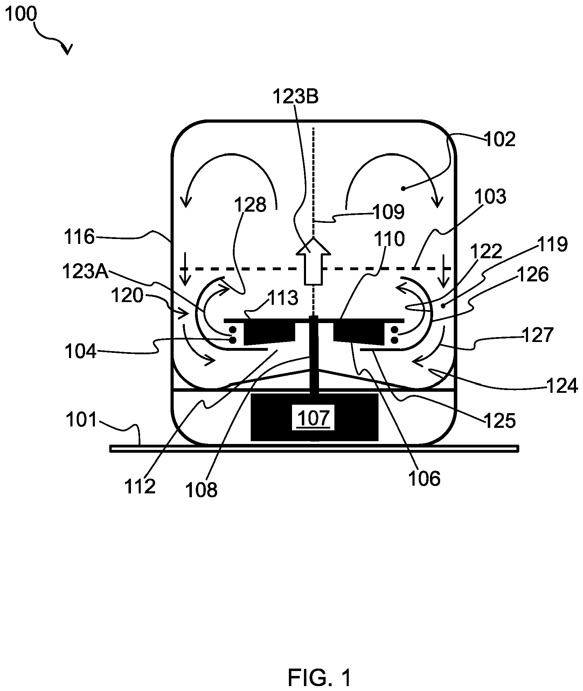

FIG. 1 provides a schematic cross-sectional view of a domestic cooking appliance 100 according to an example. In at least some embodiments, such as shown in FIG. 1, the domestic cooking appliance 100 is a table-top domestic cooking appliance 100 for cooking food ingredients while the table-top domestic cooking appliance 100 is arranged on a kitchen countertop 101.

The domestic cooking appliance 100 comprises a cooking chamber that comprises a food-receiving space 102 for receiving food ingredients. The food ingredients may be supported by a fluid permeable food support 103 at least when the food ingredients are received in the food-receiving space 102.

In some embodiments, the fluid permeable food support 103 is removable from the cooking chamber.

In such embodiments, removal of the fluid permeable food support 103 from the cooking chamber may facilitate loading/unloading of food ingredients, as well as cleaning of the fluid permeable food support 103 and the cooking chamber. Alternatively or additionally, removal of the fluid permeable food support 103 from the cooking chamber may enable the fluid permeable food support 103 to be exchanged for a different food support, e.g. a different food support configured to provide a different type of cooking effect compared to that provided by the fluid permeable food support 103.

More generally, the fluid permeable food support 103 permits a flow of air heated by a heating element assembly 104 to pass through the fluid permeable food support 103 so that the heated airflow can reach the food ingredients supported thereon.

The manner in which the heated airflow is provided will be described in more detail herein below.

The fluid permeable food support 103 can be rendered fluid permeable in any suitable manner. In at least some embodiments, the fluid permeable food support 103 comprises apertures for allowing the heated airflow to reach the food ingredients supported on the fluid permeable food support 103.

Such apertures may be dimensioned to be sufficiently large to avoid unduly impeding the heated airflow but not so large that the food supporting function of the fluid permeable food support 103 is compromised. It is further noted that the fluid permeable food support 103, e.g. the apertures thereof, can enable oil to drain away from the food ingredients during cooking.

The fluid permeable food support 103 can be formed from any suitable material capable of withstanding cooking conditions in the cooking chamber. In some embodiments, the fluid permeable food support 103 comprises a metallic material, such as aluminium and/or steel, e.g. stainless steel, for example a metallic material coated with a non-stick coating, such as a fluoropolymer coating.

More generally, the domestic cooking appliance 100 comprises a circulation system for circulating air heated by the heating element assembly 104 in the cooking chamber. The circulation system comprises a radial fan 106 that is rotatable to circulate air heated by the heating element assembly 104 in the cooking chamber.

In some embodiments, such as shown in FIG. 1, a motor 107 that drives rotation of the fan 106 is permanently coupled to the fan 106, for example via a spindle 108.

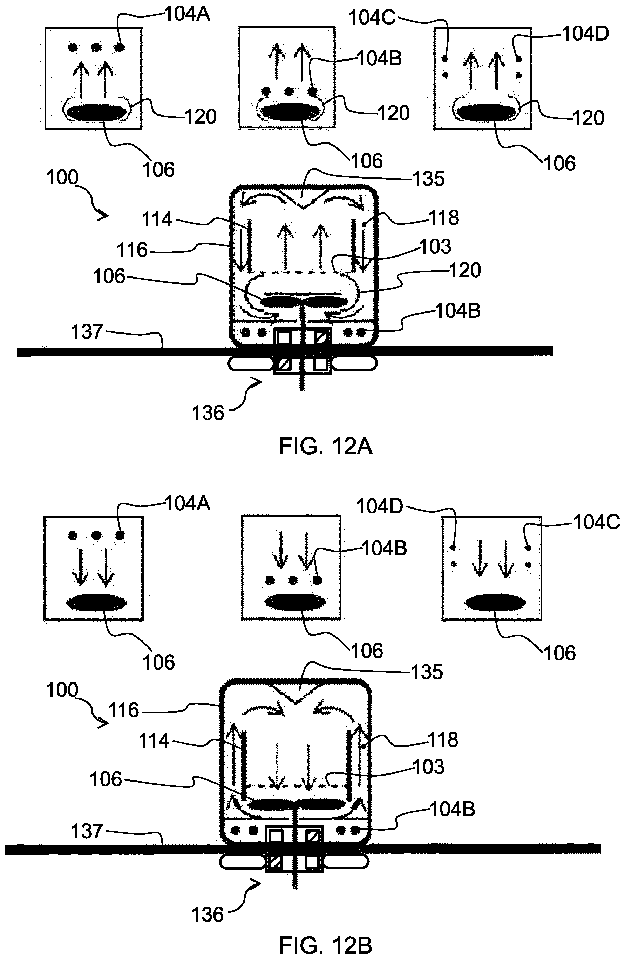

In other embodiments, the motor 107 can, for instance, be included in a separate cooking device, e.g. base station, on which the fan 106 and the cooking chamber are mountable. In this case, the fan 106 may be rotatable by the motor 107 only when the fan 106 is coupled to the motor 107 included in the separate cooking device, e.g. base station. A non-limiting example in which the fan 106 and the motor 107 are detachably coupled to each other is described herein below with reference to FIG. 12A.

Referring again to FIG. 1, the fan 106 is rotatable about an axis of rotation 109. The axis of rotation 109 may pass through a central region of the food-receiving space 102.

The fan 106 has a closed or closeable front side 110 that faces the food-receiving space 102, and an open or openable back side 112 that faces away from the food-receiving space 102. The fan 106 is rotatable about the axis of rotation 109 to generate an airflow from air received via the open back side 112 of the fan 106 while the front side 110 is closed. The airflow is directed by the fan 106 outwardly away from the axis of rotation 109.

This outward directing of the airflow may be achieved via the shape and arrangement of fan blades 113 included in the radial fan 106.

Suitable designs for the radial fan 106, and in particular the fan blades 113 thereof, are well-known per se, and will not be further described herein for the sake of brevity only.

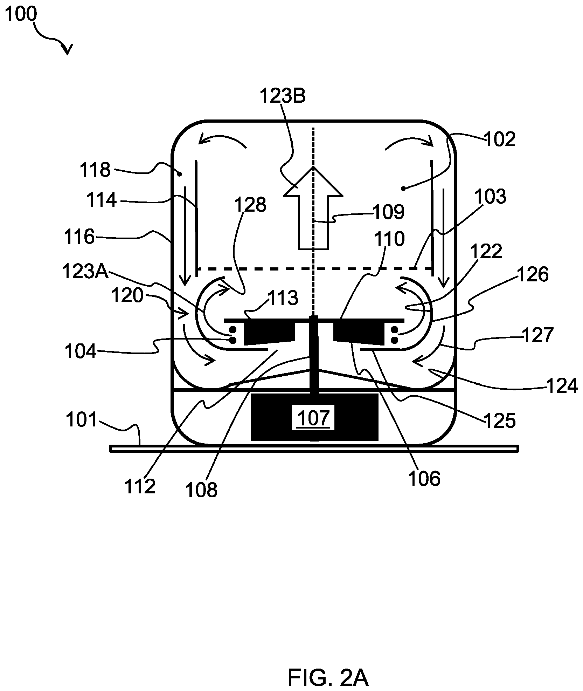

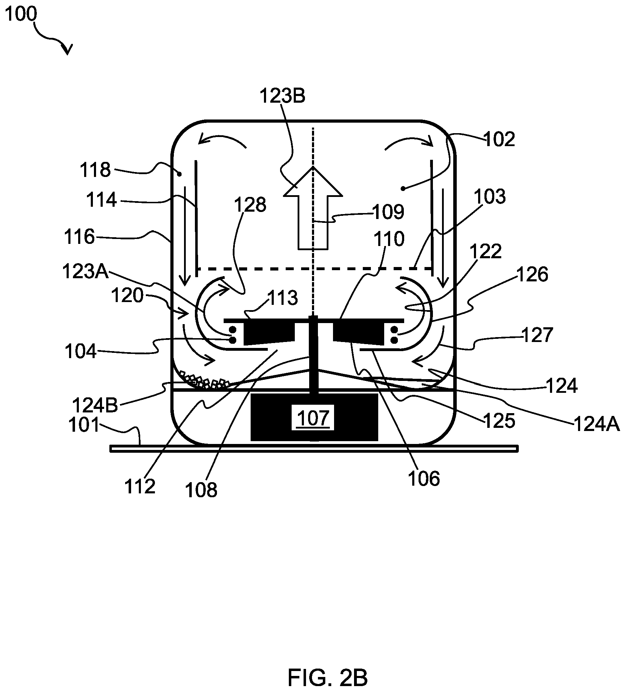

It is noted that the heating element(s) of the heating element assembly 104 can have any suitable design. In some embodiments, such as shown in FIGs. 1, 2A and 2B, the heating element(s) comprise(s) coil heating element(s). In such embodiments, the airflow may be heated as it passes through and/or past the coils of the coil heating element(s).

In some embodiments, such as shown in FIGs. 2A and 2B, the food-receiving space 102 is at least partly delimited by an inner chamber wall 114, with the inner chamber wall 114 being arranged inside a chamber wall 116 that at least partly delimits the cooking chamber.

In such embodiments, the inner chamber wall 114 may be included in a food basket that is received or removably receivable in the cooking chamber. It is noted that the fluid permeable food support 103 may, for example, be included in the basket, e.g. as a fluid permeable base of the food basket.

With continued reference to FIGs. 2A and 2B, a duct 118 may be defined between the inner chamber wall 114 and the chamber wall 116. In such embodiments, air may be circulated in the cooking chamber via the food-receiving space 102 and the duct 118.

The duct 118 can assist to guide the airflow towards the back side 112 of the fan 106, so that the air can re-enter the fan 106 via the back side 112 and once again be directed outwardly by the fan 106 away from the axis of rotation 109.

The duct 118 should, however, not be regarded as being essential, and in other embodiments, such as shown in FIG. 1, the inner chamber wall 114 and the duct 118 are omitted. An air circulation zone 119 may nonetheless be defined in the cooking chamber beneath the fluid permeable food support 103, to enable the heated airflow to pass through the food ingredients supported on the fluid permeable food support 103.

It is noted more generally that the domestic cooking appliance 100 may be configured so that the airflow traverses a height of the food-receiving space 102 when the domestic cooking appliance 100 is orientated for use, e.g. with a bottom of the food-receiving space 102 being proximal to the kitchen countertop on which the domestic cooking appliance 100 is arranged and a top of the food-receiving space 102 being distal with respect to the kitchen countertop.

In this manner, the airflow passes through, rather than merely across, the food ingredients received in the food-receiving space 102. Thus, an air frying-type cooking effect can be promoted by the domestic cooking appliance 100.

In at least some embodiments, the domestic cooking appliance 100 comprises, e.g. is in the form of, an air fryer.

It is noted at this point that arranging the fan 106 beneath the food-receiving space 102, as shown in FIGs. 1, 2A and 2B, can assist visibility of the food ingredients, since the food ingredients may be viewable from above the food-receiving space 102 without the fan 106 and, for example, other components, such as the motor 107 for driving rotation of the fan 106, obscuring view of the food ingredients.

However, it may also be desirable to provide an airflow that traverses a center of the food-receiving space 102 from the bottom of the food-receiving space 102 to the top of the food-receiving space 102, when the domestic cooking appliance 100 is orientated for use. This bottom-to-top airflow through the center of the food-receiving space 102 may be challenging to implement when the radial fan 106 is arranged beneath the food-receiving space 102.

Whilst a possible solution could be to employ an axial fan, rather than the radial fan 106, less pressure may be generated in the case of an axial fan arranged to blow air along the axial fan's rotation axis. The radial fan 106 may generate sufficient volume and velocity, particularly in comparison to an axial fan, to provide a favorable cooking result.

Partly for these reasons, and still referring to FIGs. 1, 2A and 2B, the domestic cooking appliance 100 comprises an air guide member 120 having an interior surface 122 for extending around at least part of the fan 106. The interior surface 122 is shaped to redirect the airflow initially directed outwardly by the fan 106 back towards the axis of rotation 109 and away from the front side 110 of the fan 106 into the food-receiving space 102.

Arrows 123A in FIGs. 1, 2A and 2B show redirection of the airflow on/by the interior surface 122 of the air guide member 120 towards the axis of rotation 109 and towards the food-receiving space 102. The arrow 123B denotes airflow through the food-receiving space 102, e.g. through a central region of the food-receiving space 102.

In this way, the air guide member 120 can assist to provide a bottom-to-top airflow through the center of the food-receiving space 102 in spite of the fan 106 being a radial fan 106 and being arranged beneath the food-receiving space 102.

The air guide member 120 can therefore provide flexibility in terms of where the fan 106 of the circulation system can be arranged in the domestic cooking appliance 100.

It is also generally noted that food ingredients received in the food-receiving space 102 can be unevenly distributed. In particular, the food ingredients may be predominantly distributed in a center of the food-receiving space 102 and more sparsely distributed at or towards a periphery of the food-receiving space 102. This can lead to overcooking or burning of the food ingredients where they are more sparsely distributed, and undercooking of the food ingredients where they are more plentifully distributed.

It may therefore be desirable to control a direction of heated air towards the food-receiving space 102 to assist the user to compensate for uneven food distribution in the food-receiving space 102.

The airflow redirected by the air guide member 120 can assist to minimize the risk of undercooking of food ingredients arranged in the food-receiving space 102, e.g. in the center of the food-receiving space 102, along or proximal to the axis of rotation 109, whilst also lessening the risk of overcooking or burning of food ingredients in the food-receiving space 102, e.g. at or towards a periphery of the food-receiving space 102, that are more spaced apart from the axis of rotation 109.

It is further noted that the positioning of the heating element assembly 104 in the domestic cooking appliance 100 is not particularly limited, partly as a consequence of inclusion of the air guide member 120 in the domestic cooking appliance 100. In some embodiments, such as shown in FIGs. 1, 2A and 2B, the heating element assembly 104 comprises a fan-surrounding heating element that extends at least partly around the fan 106. The fan-surrounding heating element may, for example, annularly extend around the fan 106. Alternatively, the fan-surrounding heating element may be U-shaped, and thus extend around three sides of the fan 106.

In embodiments, such as shown in FIGs. 1, 2A and 2B, in which the fan 106 is arranged, together with the air guide member 120, beneath the food-receiving space 102, the fan-surrounding heating element may consequently be arranged beneath the food-receiving space 102.

In more general terms, the heating element assembly 104 may include a lower heating element arranged beneath the food-receiving space 102.

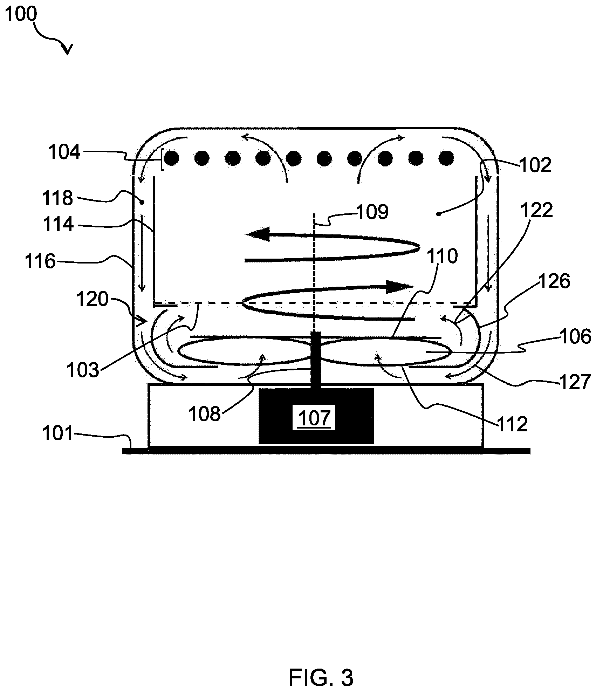

As an alternative or in addition to the fan-surrounding and/or lower heating element, the heating element assembly 104 may include an upper heating element arranged above the food-receiving space 102. A non-limiting example of this is shown in FIG. 3.

In some embodiments, and with continued reference to FIG. 3, the fan 106 and at least part of the heating element assembly 104 may be separated from each other across the food-receiving space 102, for example with the upper heating element being arranged above the food-receiving space 102 and the fan 106 being arranged beneath the food-receiving space 102.

Various non-limiting examples for illustrating different permutations of positioning of part(s) of the heating element assembly 104 and the fan 106 are described herein below.

It is noted that the air guide member 120 can be formed from any suitable thermally robust material. In some embodiments, the air guide member 120 is formed from a metallic material, e.g. aluminium and/or steel, e.g. stainless steel.

In some embodiments, and referring again to FIGs. 1, 2A and 2B, the domestic cooking appliance 100 comprises a debris collection member 124 for arranging beneath the food-receiving space 102 to collect oil 124A and/or food debris 124B (see FIG. 2B). In such embodiments, the debris collection member 124 may, for example, be arranged behind the back side 112 of the fan 106.

A shielding portion 125 may, for example, be arranged between at least part of the heating element assembly 104, e.g. the lower and/or fan-surrounding heating element, and the debris collection member 124. In such embodiments, the shielding portion 125 may, for example, be included in, or extend from, the air guide member 120.

The shielding portion 125 may assist to minimize smoking caused by the oil 124A and/or food debris 124B being directly irradiated by the heating element assembly 104, e.g. the lower and/or fan-surrounding heating element.

In some embodiments, such as shown in FIGs. 1, 2A, 2B, 3 and 4, the air guide member 120 comprises an exterior surface 126 for facing away from the fan 106, with the exterior surface 126 being arranged and shaped to guide air around the fan 106 to enable the guided air to enter the fan 106 via the back side 112. The path taken by air being guided by the exterior surface 126 of the air guide member 120 around the fan 106 towards the fan's back side 112 is represented in FIGs. 1, 2A, 2B, 3 and 4 by the arrow 127.

This arrangement and shape of the exterior surface 126 may mean that the air guide member 120 can further assist to guide air back to the back side 112 of the fan 106. The air guided to the back side 112 of the fan 106 can (re-)enter the fan 106 and be directed by the fan 106 outwardly away from the fan's 106 axis of rotation 109 towards the air guide member's 120 interior surface 122, as previously described.

In some embodiments, such as shown in FIGs. 1, 2A, 2B, 3 and 4, the exterior surface 126 of the fan 106 comprises a convex surface whose curvature guides air thereon around the fan 106 towards the fan's 106 back side 112.

In some embodiments, such as shown in FIGs. 2A, 2B, 3 and 4, the exterior surface 126 of the air guide member 120 is arranged to guide air in the duct 118 around the fan 106 to enable the guided air to enter the fan 106 via the back side 112. Thus, the exterior surface 126 of the air guide member 120 may work together with the duct 118 to deliver air back towards the back side 112 of the fan 106, where the air can (re-)enter the fan 106 and be directed by the fan 106 outwardly away from the fan's 106 axis of rotation 109 towards the air guide member's 120 interior surface 122.

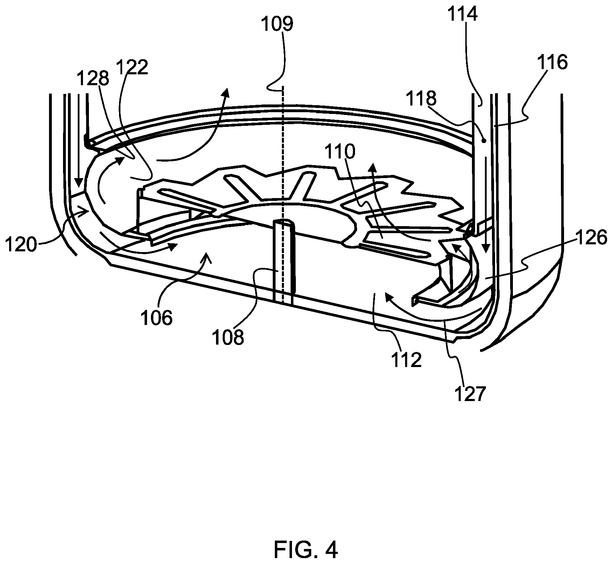

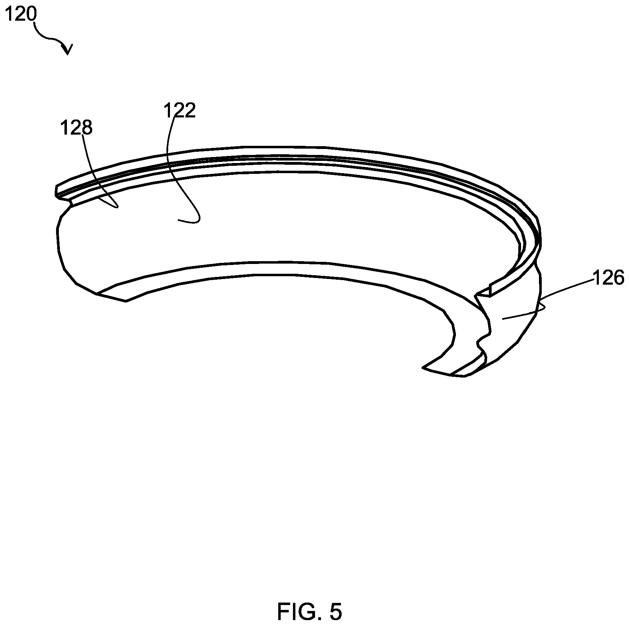

In some embodiments, and as best shown in FIGs. 4 and 5, the interior surface 122 of the air guide member 120 comprises a surface portion 128, e.g. a lip, shaped to extend towards the axis of rotation 109 and away from the front side 110 of the fan 106 towards the food-receiving space 102.

The surface portion 128 may, for example, curve towards the axis of rotation 109, but with the curve's curvature and the surface portion's 128 extension being selected to enable the surface portion 128 to direct the airflow to the food-receiving space 102, as well as towards the fan's axis of rotation 109.

In such embodiments, the airflow from the fan 106 may be initially received by an upstream surface portion of the interior surface 122 of the air guide member 120, and may be subsequently guided on the interior surface 122 to the surface portion 128, in other words a downstream surface portion 128, that directs the airflow towards the fan's axis of rotation 109 and away from the front side 110 of the fan 106 towards the food-receiving space 102.

The interior surface 122 may, for instance, curvedly extend between the upstream surface portion and the downstream surface portion 128.

This curvature of the interior surface 122 may assist to keep the airflow flowing on, and thus guided by, the interior surface 122.

It is noted that a further advantage of the radial fan 106 may be that the airflow through the food-receiving space 102 can include a rotational component, rather than merely passing though the food-receiving space 102 in a straight, e.g. vertical, line.

In some embodiments, the air guide member 120 is shaped to promote the rotating component of the airflow through the food-receiving space 102.

In other words, the air guide member 120 may be shaped to force the airflow to have even more rotational movement.

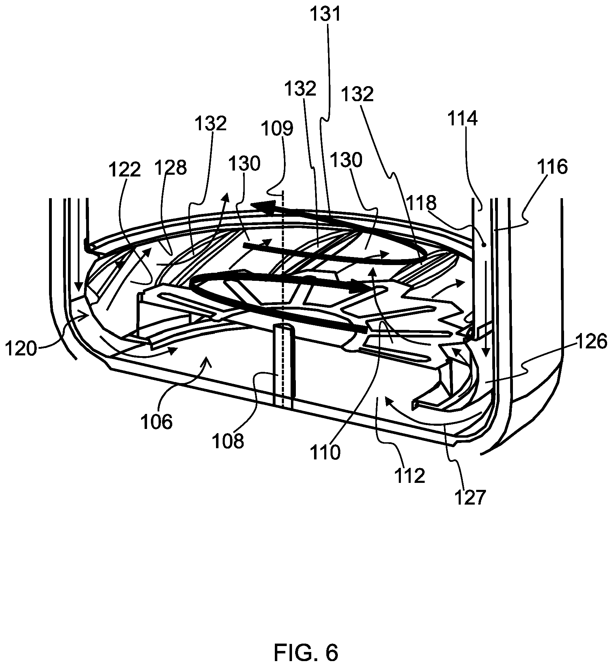

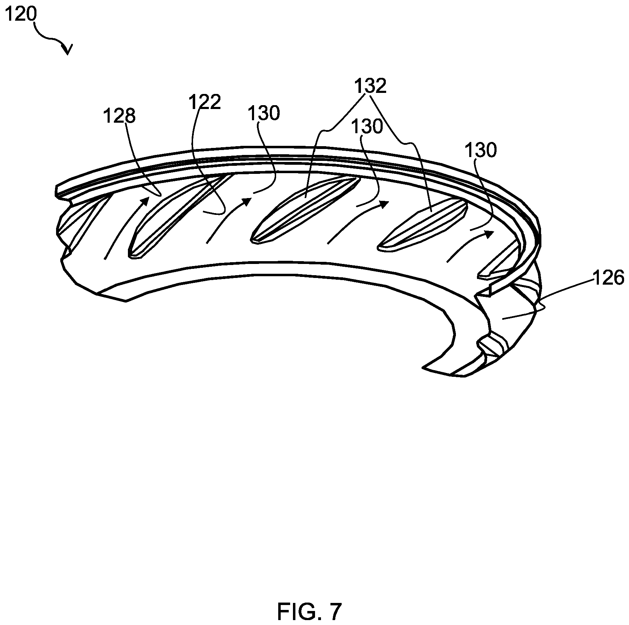

In some embodiments, such as shown in FIGs. 6 and 7, channels 130 for guiding air are defined on and/or in the interior surface 122 of the air guide member 120, with the channels 130 being orientated so that the airflow received in the channels 130 is guided around at least part of the interior surface's 122 circumference, as well as being redirected towards the axis of rotation 109 and away from the front side 110 of the fan 106 into the food-receiving space 102.

The channels 130 may promote rotation of the airflow in the food-receiving space 102. This rotating, in other words twisting, airflow (as denoted in FIG. 6 by the arrows 131) can come into contact with various different regions of the food ingredients, and can therefore assist to provide even cooking of the food ingredients received in the food-receiving space 102.

The channels 130 can be defined in any suitable manner. In some embodiments, such as shown in FIGs. 6 and 7, the channels 130 are defined between protruding portions 132 that protrude from the interior surface 122 towards the fan 106.

Such protruding portions 132, e.g. elongate protruding portions 132, may extend at an angle relative to the axis of rotation 109, with this angle being less than 90 degrees relative to the axis of rotation 109 in order to cause the airflow receiving in the channels 130 to be guided around at least part of the interior surface's 122 circumference and away from the front side 110 of the fan 106.

The protruding portions 132 may be formed in any suitable manner. In some embodiments, such as shown in FIG. 7, the protruding portions 132 are formed via a process, e.g. a casting, molding and/or stamping process, that causes the protruding portions 132 to correspond to recessed portions defined in the exterior surface 126 of the air guide member 120.

It is noted, with reference to FIGs. 5 and 7, that the present disclosure partly concerns the air guide member 120 per se, since the air guide member 120 can in principle be supplied to the user separately from the heating element assembly 104, the fan 106, and the cooking chamber (which may be sourced separately from the air guide member 120 and/or may be already in the user's possession). Upon receipt of the air guide member 120, the user may arrange the air guide member 120 around the fan 106 in order to assemble the domestic cooking appliance 100.

Otherwise, the air guide member 120, the heating element assembly 104, the fan 106, the cooking chamber, and optionally the motor 107, are included in the domestic cooking appliance 100. Thus, the user is conveniently supplied with the air guide member 120 together with the other components of the domestic cooking appliance 100.

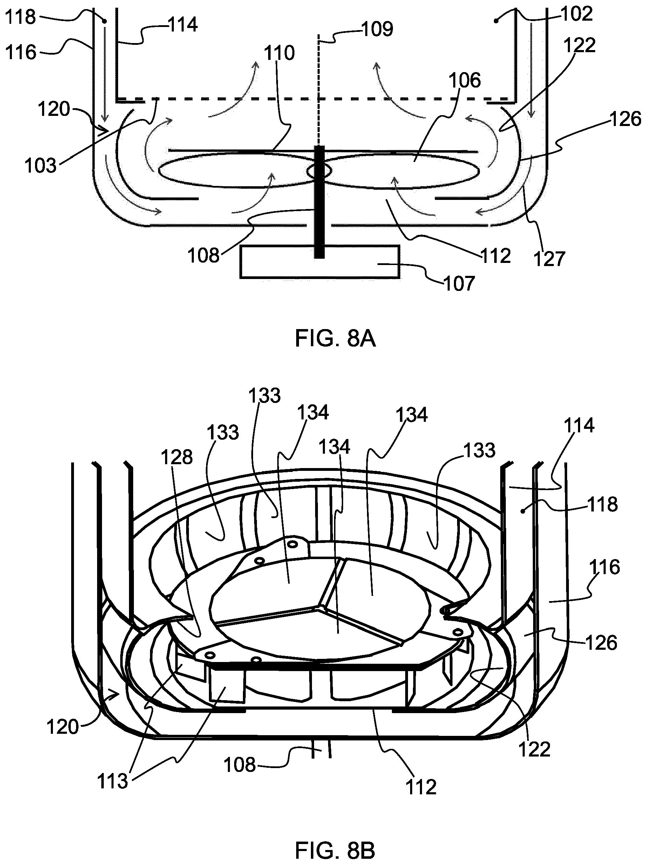

In some embodiments, such as shown in FIGs. 8A to 8D, the domestic cooking appliance 100 is configurable to switch between a first configuration and a second configuration. In the first configuration, as shown in FIGs. 8A and 8B, the interior surface 122 of the air guide member 120 is arranged to redirect the airflow towards the axis of rotation 109 and away from the front side 110 of the fan 106 into the food-receiving space 102. In the first configuration, the front side 110 of the fan 106 is closed and the air enters the fan 106 via the back side 112.

The airflow redirection by the air guide member 120 in the first configuration has already been described above in relation to the embodiments shown in FIGs. 1 to 7.

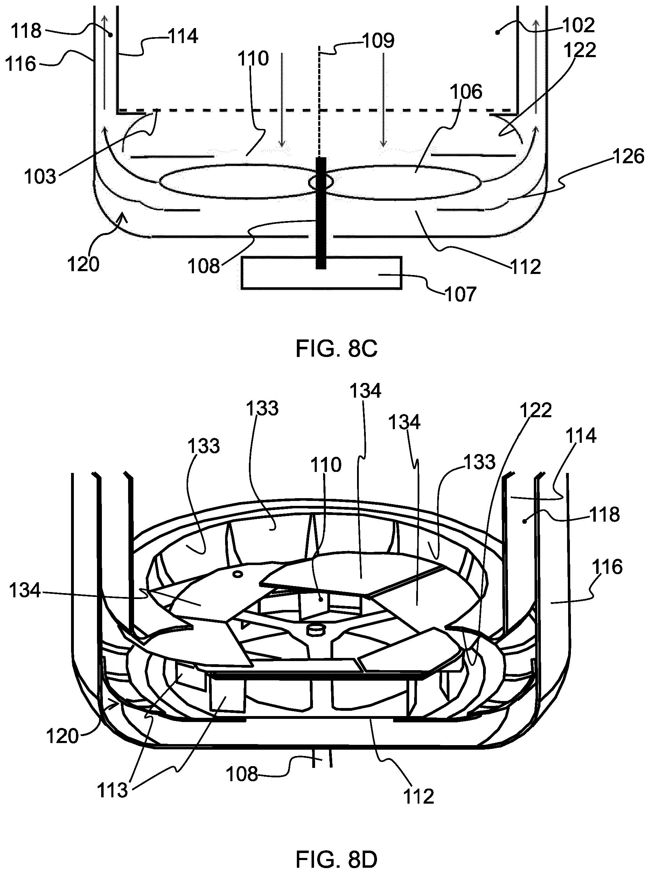

In the second configuration, and referring now to FIGs. 8C and 8D, the interior surface 122 is bypassed by the airflow, with the front side 110 of the fan 106 being open.

By configuring the domestic cooking appliance 110, e.g. configuring at least the fan 106 and the air guide member 120, to switch between the first configuration and the second configuration, different cooking conditions in the food-receiving space 102 can be selected.

In some embodiments, such as shown in FIGs. 8C and 8D, the duct 118 is arranged so that, in the second configuration, the airflow bypassing the interior surface 122 of the air guide member 120 is initially directed into the duct 118, and is subsequently passed from the duct 118 into the food-receiving space 102. The airflow direction through the duct 118 and the food-receiving space 102 may thus be reversed in the second configuration compared to in the first configuration.

The domestic cooking appliance 100 can be designed to be configurable in this way in any suitable manner. In some embodiments, such as shown in FIGs. 8B and 8D, the air guide member 120 comprises a plurality of moveable members 133, e.g. a plurality of moveable metal sheet members 133, that are moveable relative to each other to enable the airflow to bypass the interior surface 122 of the air guide member 120 in the second configuration.

The relative movement of the moveable members 133 can be implemented in various ways. In some embodiments, such as shown in FIGs. 8B and 8D, the moveable members 133 are arranged to open in the manner of a water lily, in other words by the moveable members 133 taking the form of spreadable petal-like members 133.

Moreover, the front side 110 can be opened and closed in any suitable manner. In some embodiments, the domestic cooking appliance 100 comprises a cover assembly moveable to enable closing of the front side 110 of the fan 106 when the first configuration is adopted, as shown in FIGs. 8A and 8B, and opening of the front side 110 when the second configuration is adopted, as shown in FIGs. 8C and 8D.

The cover assembly can have any suitable design. In some embodiments, the cover assembly comprises a plurality of moveable elements 134, e.g. moveable metal sheet elements 134, that are moveable relative to each other to open and close the front side 110 of the fan 106.

The movement of the moveable elements 134 can, for example, resemble movement of an eye's iris when dilating or constricting the pupil (with the pupil corresponding to the openable front side 110 of the fan 106 in the present context).

Referring to FIG. 8D, when the air guide member 120 is opened via movement of the moveable members 133, the airflow may be driven via centrifugal force to the outermost opening, while the cover assembly, at the same time, opens the front side 110 of the fan 106 so that air can be sucked into the fan 106 via the front side 110.

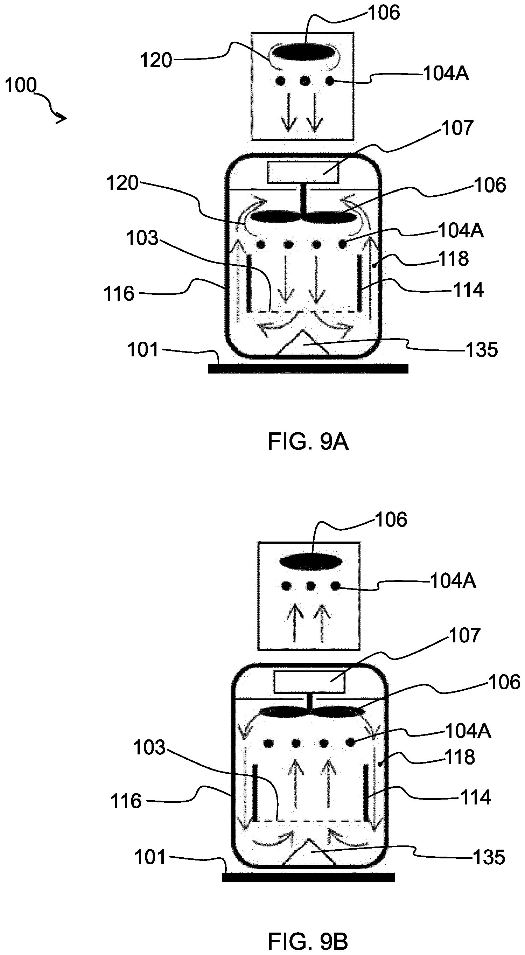

FIGs. 9A to 12B schematically illustrate how the air guide member 120 can alter the path taken by the airflow in domestic cooking appliances 100 of various different designs. It is noted that each of FIGs. 9A to 12B includes one or more simplified representations of components of the domestic cooking appliance 100 and a predominant direction of the airflow through the food-receiving space 102.

FIG. 9A schematically depicts a domestic cooking appliance 100 whose fan 106 is arranged above the food-receiving space 102 and whose heating element assembly 104 comprises, e.g. is in the form of, the upper heating element 104A described above in relation to the embodiment shown in FIG. 3.

Comparing FIG. 9A with FIG. 9B, it is evident that the effect of the air guide member 120 is to reverse the airflow direction through the food-receiving space 102, with the air guide member 120 in this case causing the airflow to traverse the height of the food-receiving space 102 in the direction of the bottom of the cooking chamber.

In some embodiments, such as shown in FIGs. 9A, 10A, 11A and 12A, the domestic cooking appliance 100 comprises an air guide element 135 arranged to guide airflow in the duct 118. The air guide element 135 may, for example, comprise a starfish-type air guide element 135 comprising radial limbs configured to guide the airflow.

The air guide element 135, e.g. the starfish-type air guide element 135, may be configured to guide the airflow that has passed through the food-receiving space 102 around the duct 118 (as shown in FIG. 9A), and/or to guide air in the duct 118 into the food-receiving space 102, e.g. when the domestic cooking appliance 100 is adopting the second configuration (as shown in FIG. 9B).

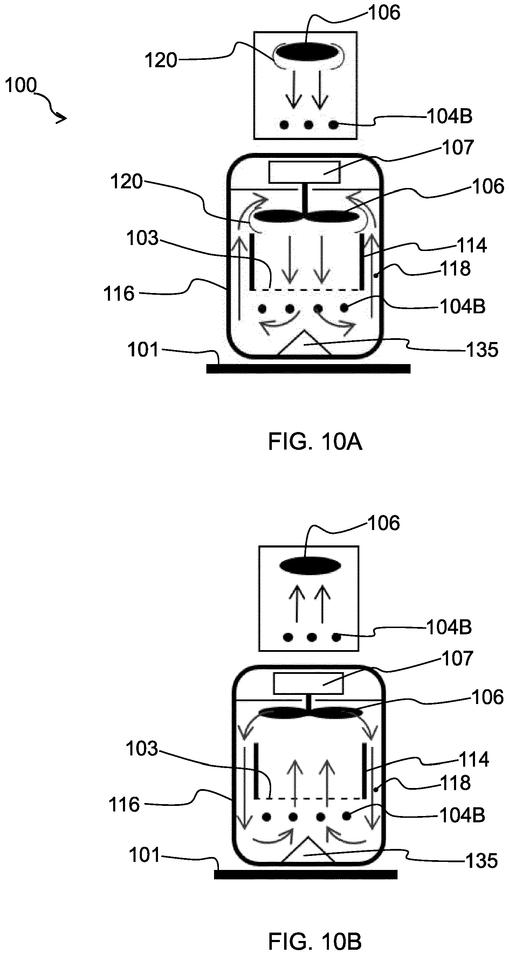

FIG. 10A schematically depicts a domestic cooking appliance 100 whose fan 106 is arranged above the food-receiving space 102 and whose heating element assembly 104 comprises, e.g. is in the form of, a lower heating element 104B arranged beneath the food-receiving space 102.

Comparing FIG. 10A with FIG. 10B, it is evident that the effect of the air guide member 120 is to reverse the airflow direction through the food-receiving space 102, with the air guide member 120 in this case causing the airflow to traverse the height of the food-receiving space 102 in the direction of the bottom of the cooking chamber.

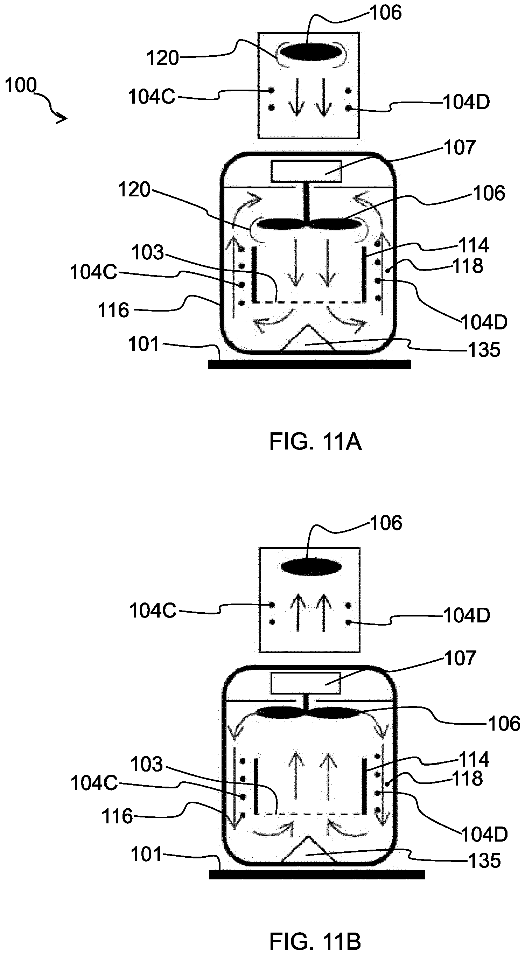

In some embodiments, such as shown in FIG. 11A, the heating element assembly 104 comprises at least one duct heating element 104C, 104D arranged in an upright portion of the duct 118, e.g. as an alternative or in addition to one or more of the upper heating element 104A and the lower 104B and/or fan-surrounding heating element.

As shown in FIGs. 11A and 11B, the upright portion of the duct 118 is for carrying air in the duct 118 between the top of the food-receiving space 102 and the bottom of the cooking chamber when the domestic cooking appliance 100 is orientated for use.

By arranging the duct heating element(s) 104C, 104D in the upright portion of the duct 118, the inner chamber wall 114 can shield the food ingredients in the food-receiving space 102 from being directly irradiated by the duct heating element(s) 104C, 104D. This can assist to lessen the risk of burning of the food ingredients.

Again, comparing FIG. 11A with FIG. 11B, it is evident that the effect of the air guide member 120 is to reverse the airflow direction through the food-receiving space 102, with the air guide member 120 in this case causing the airflow to traverse the height of the food-receiving space 102 in the direction of the bottom of the cooking chamber.

In some embodiments, such as shown in FIG. 12A, the domestic cooking appliance 100 comprises a magnetic coupling 136 for transferring drive from the motor 107 to rotate the fan 106. In such embodiments, the fan 106 may be arranged beneath the food-receiving space 102.

By arranging the fan 106 beneath the food-receiving space 102, the motor 107 and the magnetic coupling 136 may also be arranged beneath the food-receiving space 102.

In such embodiments, the motor 107 can, for instance, be included in the separate cooking device 137, e.g. base station, that also includes a driving coupling part of the magnetic coupling 136. The fan 106 may accordingly be driven via a driven coupling part that magnetically couples to the driving coupling part.

Comparing FIG. 12A with FIG. 12B, it is evident that the effect of the air guide member 120 is to reverse the airflow direction through the food-receiving space 102, with the air guide member 120 in this case causing the airflow to traverse the height of the food-receiving space 102 in the direction of the top of the cooking chamber. Thus, the air guide member 120 can enable the airflow to travel upwardly through the central region of the food-preparation space 102 despite the fan 106 being a radial fan 106 and being arranged beneath the food-receiving space 102.

As schematically denoted by the simplified representations in FIGs. 12A and 12B, the heating element assembly 104 can include the upper heating element 104A, the lower heating element 104B and/or the duct heating element(s) 104C.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to".

Any reference signs in the claims should not be construed as limiting the scope.

## Claims

1. A domestic cooking appliance (100) for air frying food ingredients, the domestic cooking appliance comprising:
a cooking chamber comprising a food-receiving space (102) for receiving the food ingredients;
a heating element assembly (104; 104A; 104B; 104C, 104D);
a circulation system for circulating air heated by the heating element assembly in the cooking chamber, wherein the circulation system comprises a radial fan (106) rotatable to circulate air heated by the heating element assembly, a closed or closeable front side (110) of the fan facing the food-receiving space, and an open or openable back side (112) of the fan facing away from the food-receiving space, the fan being rotatable about an axis of rotation (109) to generate an airflow from air received via the open back side of the fan while the front side is closed, the airflow being directed by the fan outwardly away from the axis of rotation; and
an air guide member (120) having an interior surface (122) for extending around at least part of the fan, wherein the interior surface is shaped to redirect the airflow back towards the axis of rotation and away from the front side of the fan into the food-receiving space.

2. The domestic cooking appliance (100) according to claim 1, wherein the air guide member (120) comprises an exterior surface (126) for facing away from the fan (106), wherein the exterior surface is arranged and shaped to guide air around the fan to enable the guided air to enter the fan via the back side (112).

3. The domestic cooking appliance (100) according to claim 1 or claim 2, comprising a fluid permeable food support (103) for supporting the food ingredients at least when the food ingredients are received in the food-receiving space (102), an air circulation zone being defined in the cooking chamber beneath the fluid permeable food support.

4. The domestic cooking appliance (100) according to any one of claims 1 to 3, wherein the interior surface (122) comprises a surface portion (128) shaped to extend towards the axis of rotation (109) and away from the front side (110) towards the food-receiving space (102).

5. The domestic cooking appliance (100) according to any one of claims 1 to 4, comprising a chamber wall (116) at least partly delimiting the cooking chamber, the food-receiving space (102) being at least partly delimited by an inner chamber wall (114), the inner chamber wall being arranged inside the chamber wall with a duct (118) being defined between the inner chamber wall and the chamber wall; optionally wherein the inner chamber wall is included in a food basket received or receivable in the cooking chamber.

6. The domestic cooking appliance (100) according to claim 5 as according to claim 4, wherein the exterior surface (126) of the air guide member (120) is arranged to guide air in the duct (118) around the fan (106) to enable the guided air to enter the fan via the back side (112).

7. The domestic cooking appliance (100) according to any one of claims 1 to 6, wherein channels (130) for guiding air are defined on and/or in the interior surface (122) of the air guide member (120), the channels being orientated so that the airflow received in the channels is guided around at least part of the interior surface's circumference, as well as being redirected towards the axis of rotation (109) and away from the front side (110) into the food-receiving space (102).

8. The domestic cooking appliance (100) according to any one of claims 1 to 7, configurable to switch between:
a first configuration in which the interior surface (122) of the air guide member (120) is arranged to redirect the airflow towards the axis of rotation (109) and away from the front side (110) into the food-receiving space (102), with the front side (110) of the fan (106) being closed; and
a second configuration in which the interior surface is bypassed by the airflow, with the front side of the fan being open.

9. The domestic cooking appliance (100) according to claim 8 as according to claim 5 or claim 6, wherein the duct (118) is arranged so that, in the second configuration, the airflow bypassing the interior surface (122) is initially directed into the duct, and is subsequently passed from the duct into the food-receiving space (102).

10. The domestic cooking appliance (100) according to claim 8 or claim 9, wherein the air guide member (120) comprises a plurality of moveable members (133) that are moveable relative to each other to enable the airflow to bypass the interior surface (122) in the second configuration; and wherein the domestic cooking appliance comprises a cover assembly moveable to open and close the front side (110) of the fan (106).

11. The domestic cooking appliance (100) according to any one of claims 1 to 10, comprising a magnetic coupling (136) for transferring drive from a motor (107) to rotate the fan (106).

12. The domestic cooking appliance (100) according to any one of claims 1 to 11, wherein the fan (106) is arranged beneath the food-receiving space (102) or above the food-receiving space (102) when the domestic cooking appliance is orientated for use.

13. The domestic cooking appliance (100) according to any one of claims 1 to 12, wherein the heating element assembly (104; 104A; 104B; 104C, 104D) comprises:
a fan-surrounding heating element that extends at least partly around the fan (106);
an upper heating element (104A) arranged above the food-receiving space (102); and/or
a lower heating element (104B) arranged beneath the food-receiving space.

14. The domestic cooking appliance (100) according to any one of claims 1 to 13, comprising:
a debris collection member (124) for arranging beneath the food-receiving space (102) to collect oil and/or food debris, the debris collection member being arranged behind the back side (112) of the fan (106); and
a shielding portion (125) arranged between at least part of the heating element assembly (104; 104A; 104B; 104C, 104D) and the debris collection member.

15. The domestic cooking appliance (100) according to any one of claims 1 to 14, wherein the fan (106) and at least part of the heating element assembly (104; 104A; 104B; 104C, 104D) are separated from each other across the food-receiving space (102).
